# EUROPEAN PATENT APPLICATION

(11) **EP 0 635 692 A1**
(43) Date of publication of application: **25.01.1995**
(21) Application number: 94109580.4
(22) Date of filing: 21.06.1994
(51) Int. Cl.: F27D 17/00, C03B 5/237

(54) **Radiative recuperation furnace system**

(30) Priority: 22.06.1993 US 79587
(71) Applicant: PRAXAIR TECHNOLOGY, INC., Danbury, CT 06817-0001 (US)
(72) Inventor: Kobayashi, Hisashi, Putnam Valley, New York 10579 (US)
(74) Representative: Schwan, Gerhard, Dipl.-Ing.

(57) **Abstract**

A furnace system wherein heat from a furnace is radiated through a furnace exit port (3) to a reradiating wall (5) outside the furnace in a reradiation zone (2) located between the furnace and the flue and reradiated back therefrom to the furnace, and the gas flow area in the reradiation zone (2) past the reradiation wall (5) is greater than or equal to the gas flow area of the furnace exit port (3) enabling high velocity gas flow from the furnace to impinge upon the reradiation wall and increase heat recovery.

## Description

### Technical Field

This invention relates generally to furnace systems and is particularly advantageous when the furnace is heated by oxy-fuel combustion.

### Background Art

Furnaces are employed in a large number of industrial processes such as glassmaking, steelmaking, metal smelting and cement manufacturing. Generally heat is provided for the operation of the furnace by the combustion of a fuel, such as natural gas, with air. Although air is relatively inexpensive for use in such combustion, there are several disadvantages to the use of air which are causing furnace operators to change from air-based combustion to oxy-fuel combustion. Since air is comprised of nearly 80 percent incombustible nitrogen, a large amount of the heat produced by the combustion is consumed in heating the nitrogen rather than heating the furnace charge such as the glass or steel. Moreover, the large volume of air which must be used and the consequent pressure drop in the system increases the costs of the fluid handling equipment. Still further, the presence of the large amount of nitrogen creates conditions for the generation of nitrogen oxides (NOₓ) in carrying out the combustion which are generally recognized as being harmful pollutants.

These problems may be significantly reduced by the use of oxy-fuel combustion in place of air-based combustion for the generation of heat to operate a furnace. One economic disadvantage with oxy-fuel combustion is the added cost of oxygen which is required in proportion to the amount of fuel input. It is particularly important to reduce furnace heat losses with oxy-fuel combustion so that both fuel and oxygen requirements are minimized. Radiation heat loss through a furnace exit is a source of inefficiency in operating the furnace.

Accordingly it is an object of the invention to provide a system wherein heat is provided into the furnace, particularly by oxy-fuel combustion, and wherein radiation heat loss through the flue is reduced.

### Summary of the Invention

The above and other objects which will become apparent to one skilled in the art upon a reading of this disclosure are attained by the present invention one aspect of which is:
A reradiation furnace system comprising:
(A) a furnace zone;
(B) a flue conduit;
(C) a reradiation zone positioned between the furnace zone and the flue conduit said reradiation zone being in flow communication with the flue conduit and also with the furnace zone through a furnace exit port; and
(D) a reradiation wall positioned within the reradiation zone and having a size such that the total cross-sectional flow area in the reradiation zone for flow of gas past the reradiation wall is greater than or equal to the furnace exit port cross-sectional flow area.

Another aspect of the invention is:
A method for operating a furnace comprising:
(A) providing heat and furnace gases into a furnace zone;
(B) passing heat by radiation from the furnace zone to a reradiation wall positioned within a reradiation zone which is in flow communication with the furnace zone through a furnace exit port;
(C) passing furnace gases from the furnace zone through the reradiation zone past the reradiation wall and through a flue conduit which is in flow communication with the reradiation zone wherein the cross-sectional flow area available for the flow of furnace gases through the reradiation zone past the reradiation wall is greater than or equal to the cross-sectional flow area available for the flow of furnace gases through the furnace exit port; and
(D) reradiating heat from the reradiation wall into the furnace zone.

As used herein the term "oxy-fuel combustion" means the burning of fuel using an oxidant fluid which has oxygen present in a concentration which exceeds that of air.

As used herein the terms "furnace" and "furnace zone" mean an enclosure in which a fuel is combusted to generate heat and transfer heat to a charge.

As used herein the term "radiation" means emission and propagation of heat in wave form as electromagnetic energy from hot surfaces or gases.

### Brief Description of the Drawings

Figure 1 is simplified cross-sectional plan view of one particularly preferred embodiment of the invention.

Figures 2, 3 and 4 are simplified cross-sectional plan views of other preferred embodiments of the invention.

### Detailed Description

In the practice of this invention heat from within a furnace, which would otherwise be radiated out from the furnace through the flue, is instead radiated from the furnace to a reradiation wall positioned within a reradiation zone intermediate the furnace and the flue. The reradiation zone is sized so that the net flow area through the reradiation zone for flow of gas past the reradiation wall is equal to or greater than the flow area of the furnace exit port. In this way the flow of gas from the furnace through the reradiation zone and the flue conduit has its greatest restriction upstream of the reradiation wall. The reradiation wall is positioned such that direct thermal radiation from the furnace is substantially totally intercepted by the reradiation wall and also such that heat is reradiated through the furnace exit port between the reradiation zone and the furnace and back into the furnace thus reducing radiation heat losses and improving the efficiency of the furnace operation.

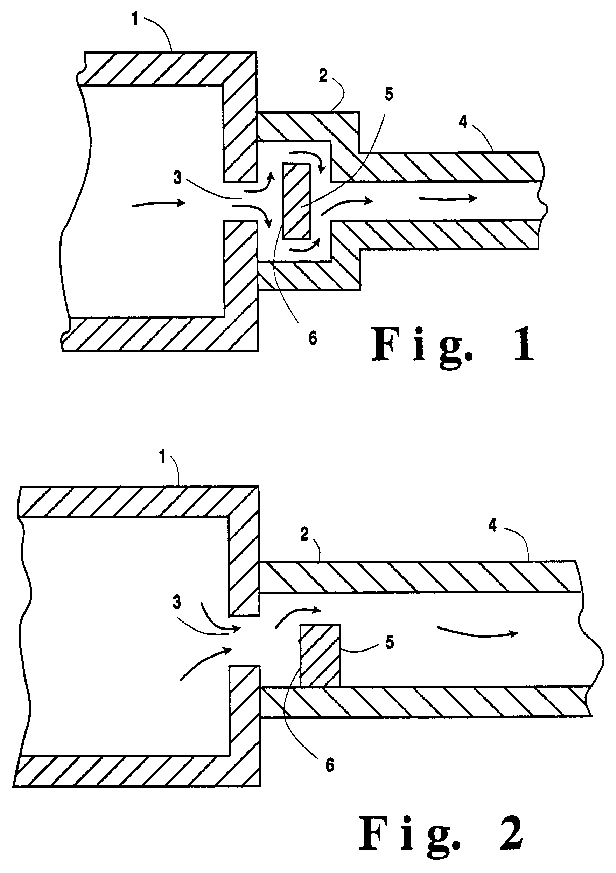

The invention will be described in greater detail with reference to the Drawings. Referring now to Figure 1, furnace zone 1 contains furnace gases which are provided into the furnace, at least in part, by the combustion of fuel and oxidant. Preferably the combustion is oxy-fuel combustion. The furnace may be, for example, a glass making furnace, a steel making furnace, or any other suitable industrial furnace. In carrying out the combustion, fuel such as, for example, natural gas, coke oven gas, propane, hydrogen, atomized oil and methane, is combusted with oxygen provided by oxidant fluid, either within the furnace and/or within a burner port communicating with the furnace. The oxidant fluid is preferably a fluid having an oxygen concentration of at least 30 percent and preferably at least 90 percent. Most preferably the oxidant fluid is technically pure oxygen having an oxygen concentration of at least 99.5 percent. The combustion generates heat and furnace gases which are provided into the furnace either from a burner port communicating with the furnace or by generation in situ within the furnace. The furnace gases include all the various gases within furnace zone 1. Examples of furnace gases include carbon dioxide, water vapor, nitrogen and oxygen.

Reradiation zone 2 is in flow communication by means of furnace exit port 3 with furnace zone 1 and also is in flow communication with flue conduit 4. Preferably, as illustrated in Figure 1, reradiation zone 2 has a cross-sectional area which exceeds that of furnace exit port 3 and which also exceeds that of flue conduit 4.

Within reradiation zone 2 there is positioned reradiation wall 5. Reradiation wall 5 may be comprised of any material suitable for service at the temperatures normally experienced in this environment. Typically such temperatures are within the range of from 1000°C to 3000°F. Examples of materials suitable for the reradiation wall include fire clay bricks and other refractory bricks. Preferably the reradiation wall is comprised of the same material as the inside walls of the furnace.

Furnace gases pass from furnace zone 1 through reradiation zone 2, past reradiation wall 5 and through flue conduit 4 for eventual release to the atmosphere as shown by the flow arrows. Reradiation wall 5 is sized such that substantially all of the thermal radiation which passes from the furnace through the furnace exit port is intercepted by the reradiation wall and also such that the total cross-sectional flow area in the reradiation zone available for the flow of furnace gases past the reradiation wall is equal to or greater than the cross-sectional flow area of furnace exit port 3. In this practice fluid flow dynamic inefficiencies are minimized and furnace operation is not compromised. Typically the cross-sectional flow area of the flue conduit will be within the range of from about 1 to 2 square feet per million BTU per hour of firing rate with air as the oxidant and from about 0.1 to 0.5 square feet per million BTU of firing rate with technically pure oxygen as the oxidant. Generally, the average velocity of the furnace gases passing from the furnace zone through the reradiation zone and the flue conduit will be within the range of from 10 to 30 feet per second with air as the oxidant and within the range of from 20 to 60 feet per second with technically pure oxygen as the oxidant. The velocity of the furnace gases passing through the reradiation zone and the flue conduit preferably remains relatively constant so as to achieve the desired fluid flow effects.

Heat from within furnace zone 1 is passed by radiation from furnace zone 1 through furnace exit port 3 to reradiation wall 5. The heat is absorbed by reradiation wall 5 and is reradiated back from reradiation wall 5 through port 3 into furnace zone 1. In this way heat, which otherwise would be lost out the flue, is redeployed in the furnace thus increasing the efficiency of the furnace operation. Preferably, as illustrated in Figure 1, the side 6 of reradiation wall 5 facing furnace zone 1 is oriented perpendicular to a straight line passing from furnace zone 1 through port 3 into reradiation zone 2.

Preferably, as illustrated in Figure 1, the flow of furnace gases from furnace zone 1 through port 3 directly impinges upon reradiation wall 5 at wall face 6. The furnace gases contain heat and carry heat out from the furnace as they flow out the furnace. By the direct impingement of the furnace gases upon the reradiation wall, heat from the furnace zone is transferred to the reradiation wall by convection. This convected heat is in addition to the heat radiated to the reradiation wall from the furnace zone. Heat passage to the reradiation wall by convection is then reradiated back into furnace zone 1 through port 3. In this way the total heat reradiated from reradiation wall 5 into furnace zone 1 may exceed the heat radiated from furnace zone 1 to reradiation wall 5 and further improves the operating efficiency of the furnace.

Preferably the size of furnace exit port 3 is made as small as possible as this increases the velocity of the furnace gases passing through the furnace port and consequently increases the convective heat transfer to the reradiation wall. In addition, an irregular surface on the reradiation wall face 6, such as by having a staggered brick arrangement, increases the convective heat transfer to the reradiation wall. The size of the reradiation wall should preferably exceed the size of the furnace exit port so as to avoid the direct radiation of heat from the furnace zone past the reradiation wall, and the reradiation wall should preferably be positioned as close to the furnace exit port as possible without causing the cross-sectional flow area in the reradiation zone for the flow of gas past the reradiation wall to be less than the cross sectional flow area of the furnace exit port.

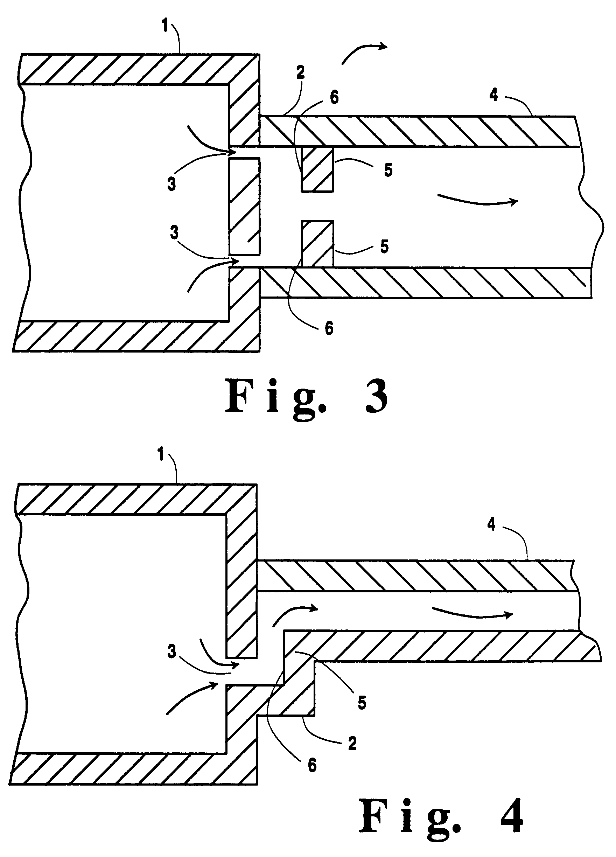

With oxy-fuel firing the stack draft is often greater than that of air-based firing. This is due to two factors: (1) since no heat recovery systems are used, little pressure drop occurs in the flue conduit, and (2) flue gas is hotter resulting in a higher draft. Hence, a higher pressure drop in the flue system can be allowed. Higher velocities also increase convective heat transfer from the hot gases to the reradiation wall and have a beneficial effect on recuperating a portion of the sensible heat of the furnace gases
Figures 2, 3 and 4 illustrate other embodiments of the invention. The numerals in Figures 2, 3 and 4 correspond to those of Figure 1 for the common elements and these common will not be described again in detail. In Figure 2 there is illustrated an embodiment wherein the reradiation wall forms the outer boundary of the reradiation zone. This is also the case in the embodiment illustrated in Figure 3 wherein the reradiation wall is in two parts corresponding to two parts of the furnace exit port. In Figure 4, the reradiation wall borders the ambient atmosphere. This embodiment is less preferred because some heat will radiate from the reradiation wall to the outside.

The following example is provided to further illustrate the invention and is not intended to be limiting.

A glassmaking furnace system having a configuration similar to that illustrated in Figure 2 was employed. Heat and furnace gases were provided to the furnace by oxy-fuel combustion. The fuel was natural gas and the oxygen was provided in the form of technically pure oxygen. Furnace gases flowed from the furnace zone through the reradiation zone and the flue conduit at an average velocity of about 40 feet per second. The cross-sectional flow area of the furnace exit port was 4.5 square feet and the cross-sectional flow area in the reradiation zone for the flow of gas past the reradiation wall was 4.5 square feet. The reradiation wall was constructed of alumina, zirconia, silica (AZS) refractory bricks and was located about 2 feet past the furnace exit port. The temperature within the furnace zone proximate the furnace exit port communicating between the furnace zone and the reradiation zone was about 2700°F. Wall temperatures were measured by an optical pyrometer at the furnace inner wall proximate port 3, on reradiation facing wall 6 and on the flue conduit inner wall surface about three feet downstream of the reradiation wall. The temperature at the furnace inner wall was 2600°F, the temperature at the reradiation facing wall 6 was 2515°F, and the temperature at the flue conduit wall surface was only 2230°F. This example illustrates the effectiveness of the invention in retaining heat which would otherwise have been lost, without unduly burdening the fluid flow dynamics required for effective furnace performance.

Although the invention has been described in detail with reference to certain preferred embodiments, those skilled in the art will recognize that there are other embodiments of the invention within the spirit and the scope of the claims.

## Claims

1. A reradiation furnace system comprising:
(A) a furnace zone;
(B) a flue conduit;
(C) a reradiation zone positioned between the furnace zone and the flue conduit said reradiation zone being in flow communication with the flue conduit and also with the furnace zone through a furnace exit port; and
(D) a reradiation wall positioned within the reradiation zone and having a size such that the total cross-sectional flow area in the reradiation zone for flow of gas past the reradiation wall is greater than or equal to the furnace exit port cross-sectional flow area.

2. The reradiation furnace system of claim 1 wherein the reradiation wall is a unitary piece.

3. The reradiation furnace system of claim 1 wherein the reradiation wall comprises a plurality of pieces.

4. The reradiation furnace system of claim 1 wherein the reradiation wall is positioned within the reradiation zone such that substantially all the thermal radiation which passes from the furnace zone through the furnace exit port is intercepted by the reradiation wall.

5. A method for operating a furnace comprising:
(A) providing heat and furnace gases into a furnace zone;
(B) passing heat by radiation from the furnace zone to a reradiation wall positioned within a reradiation zone which is in flow communication with the furnace zone through a furnace exit port;
(C) passing furnace gases from the furnace zone through the reradiation zone past the reradiation wall and through a flue conduit which is in flow communication with the reradiation zone wherein the cross-sectional flow area available for the flow of furnace gases through the reradiation zone past the reradiation wall is greater than or equal to the cross-sectional flow area available for the flow of furnace gases through the furnace exit port; and
(D) reradiating heat from the reradiation wall into the furnace zone.

6. The method of claim 5 wherein heat and furnace gases are provided into the furnace zone by oxy-fuel combustion.

7. The method of claim 5 wherein substantially all of the radiated heat which passes from the furnace zone through the furnace exit port is intercepted by the reradiation wall.

8. The method of claim 5 further comprising passing heat from furnace gases to the reradiation wall by convection and reradiating more heat from the reradiation wall to the furnace zone than was radiated to the reradiation wall from the furnace zone.
